(19)

**Europäisches Patentamt**

**European Patent Office**

**Office européen des brevets**

(11) **EP 4 230 921 A1**

(12) **EUROPÄISCHE PATENTANMELDUNG**

(43) Veröffentlichungstag:
   **23.08.2023 Patentblatt 2023/34**

(21) Anmeldenummer: **23154637.5**

(22) Anmeldetag: **02.02.2023**

(51) Internationale Patentklassifikation (IPC):
   **F24D 19/10** (2006.01)    **F24H 15/175** (2022.01)
   **G05D 23/19** (2006.01)    **F24H 15/254** (2022.01)
   **F24H 15/31** (2022.01)

(52) Gemeinsame Patentklassifikation (CPC):
   **F24D 19/1018; F24H 15/175; F24H 15/254;**
   **F24H 15/31; G05D 23/1934;** F24D 2220/042;
   F24D 2220/2081

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **KH MA MD TN**

(30) Priorität: **17.02.2022 DE 102022103778**

(71) Anmelder: **Viessmann Climate Solutions SE**
   **35108 Allendorf (DE)**

(72) Erfinder: **SKIBA, Paul**
   **18106 Rostock (DE)**

(74) Vertreter: **MERH-IP Matias Erny Reichl Hoffmann**
   **Patentanwälte PartG mbB**
   **Paul-Heyse-Strasse 29**
   **80336 München (DE)**

(54) **VERFAHREN ZUM STEUERN EINER RAUMTEMPERATUR, HEIZUNGSSYSTEM ZUM STEUERN EINER RAUMTEMPERATUR UND STEUERVORRICHTUNG ZUM EINSATZ IN EINEM HEIZUNGSSYSTEM**

(57)    Die Erfindung stellt ein Verfahren zum Steuern einer Raumtemperatur mittels eines auf einem hydraulischen Leitungsnetzwerk 50 für ein Energietransportmedium basierenden Heizungssystems, das zumindest eine zum Temperieren des Energietransportmediums eingerichtete Wärmequellenvorrichtung 30, eine einem ersten Raum 101 zugeordnete, über das hydraulische Leitungsnetzwerk 50 mit dem temperierten Energietransportmedium versorgte erste Wärmetauschvorrichtung 10, die zum Temperieren des ersten Raums 101 eingerichtet ist, und eine einem vom ersten Raum 101 abgetrennten, zweiten Raum 102 zugeordnete, über das hydraulische Leitungsnetzwerk 50 mit dem temperierten Energietransportmedium versorgte zweite Wärmetauschvorrichtung 20, die zum Temperieren des zweiten Raums 102 eingerichtet ist, umfasst, wobei das Verfahren ein Bereitstellen einer Soll-Temperatur $T_{Soll,1}$ für den ersten Raum 101 und einer Soll-Temperatur $T_{Soll,2}$ für den zweiten Raum 102, ein Erfassen einer Ist-Temperatur $T_{Ist,1}$ im ersten Raum 101 und einer Ist-Temperatur $T_{Ist,2}$ im zweiten Raum 102, ein Ermitteln einer ersten Temperaturdifferenz $\Delta T_1$ zwischen der bereitgestellten Soll-Temperatur $T_{Soll,1}$ für den ersten Raum 101 und der erfassten Ist-Temperatur $T_{Ist,1}$ im ersten Raum 101, ein Ermitteln einer zweiten Temperaturdifferenz $\Delta T_2$ zwischen der bereitgestellten Soll-Temperatur $T_{Soll,2}$ für den zweiten Raum 102 und der erfassten Ist-Temperatur $T_{Ist,2}$ im zweiten Raum 102 und ein Steuern einer Raumtemperatur im ersten Raum 101 durch ein Einstellen eines eine Wärmetauschleistung im ersten Raum 101 regulierenden Betriebsparameters $u_1$ der ersten Wärmetauschvorrichtung 10 in Abhängigkeit der ermittelten ersten Temperaturdifferenz $\Delta T_1$ und zusätzlich durch ein Einstellen eines eine Wärmetauschleistung im zweiten Raum 102 regulierenden Betriebsparameters $u_2$ der zweiten Wärmetauschvorrichtung 20 in Abhängigkeit der ermittelten ersten Temperaturdifferenz $\Delta T_1$ und der ermittelten zweiten Temperaturdifferenz $\Delta T_2$ umfasst, bereit

Fig. 1

## Beschreibung

### Technisches Gebiet

Die vorliegende Erfindung betrifft ein Verfahren zum Steuern einer Raumtemperatur, ein Heizungssystem zum Steuern einer Raumtemperatur und eine Steuervorrichtung zum Einsatz in einem Heizungssystem.

### Hintergrund der Erfindung

Aus dem Stand der Technik sind verschiedene Heizungssysteme zum Einsatz in einem Gebäude bekannt, mit denen Einfluss auf Raumtemperaturen in einer Vielzahl von Räumen des Gebäudes genommen werden soll. Hierzu erfolgt in den Räumen über einen jeweils dort angeordneten Wärmetauscher ein Wärmetausch zwischen dem Raum und einem durch den Wärmetauscher strömenden, temperierten Energietransportmedium. Im Zuge dessen wird dem Raum üblicherweise von dem Energietransportmedium bereitgestellte Wärmeenergie zugeführt, um so die Raumtemperatur zu erhöhen.

Besagte Wärmetauscher können hierbei z. B. als Radiatoren oder Fußbodenheizungen ausgeführt sein und sind zwecks Versorgung mit dem Energietransportmedium über ein hydraulisches Leitungsnetzwerk mit einer üblicherweise zentral im Gebäude bereitgestellten Wärmequellenvorrichtung zum Temperieren des Energietransportmediums, z. B. einer Wärmepumpenanlage oder einer Öl-/Gas/Pellet-Heizungsanlage, verbunden.

Durch die zentrale Versorgung mit dem Energietransportmedium ergeben sich insbesondere beim Einsatz einer Vielzahl von Wärmetauschern hohe Anforderungen an das Heizungssystem im Hinblick auf ein energieeffizientes Betreiben sowie auf ein komfortables Steuern der Raumtemperaturen in jedem einzelnen Raum der Vielzahl der durch das Heizungssystem zu temperierenden Räume.

So sollen einerseits in jedem einzelnen Raum vorgegebene Soll-Temperaturen möglichst schnell erreicht und auch stabil gehalten werden und andererseits soll die Wärmequellenvorrichtung möglichst energiesparend betrieben werden, sodass ein Volllastbetrieb der selbigen möglichst vermieden wird.

Aus der EP 2 175 206 A2 ist hierzu ein Verfahren bekannt, bei dem Temperaturdifferenzen zwischen erfassten Ist- und vorgegebenen Soll-Temperaturen in den jeweiligen Räumen des Gebäudes ermittelt werden. Sämtliche ermittelte Temperaurdifferenzen werden im Anschluss zur Steuerung der zentralen Wärmequellenvorrichtung eingesetzt, wobei der Raum mit der größten Temperaturdifferenz zwischen Ist- und Soll-Temperatur als Führungsraum definiert wird und maßgebend für eine Einstellung einer Betriebsleistung der zentralen Wärmequellenvorrichtung selbst ist. In anderen Worten richtet sich ein Betriebszustand der Wärmequellenvorrichtung stets nach der Temperaturdifferenz im Führungsraum.

Liegt in einem bespielhaften Extremfall allerdings eine im Vergleich zu den übrigen Temperaturdifferenzen hoch ausfallende Temperaturdifferenz im Führungsraum vor, wird ein Vollastbetrieb der Wärmequellenvorrichtung initiiert, obwohl im Wesentlichen lediglich ein Raum im Gebäude, der Führungsraum, aufgeheizt werden müsste, was zu einer entsprechend schlechten Energiebilanz beim Betrieb des Heizungssystems führt.

### Zusammenfassung der Erfindung

Eine Aufgabe der vorliegenden Erfindung ist es daher, eine gegenüber dem Stand der Technik verbesserte Möglichkeit zum Steuern einer Raumtemperatur mittels eines Heizungssystems bereitzustellen, mit der ein effizientes und komfortables Steuern der Raumtemperatur bei zeitgleich energieeffizientem Betrieb des Heizungssystems umgesetzt werden kann.

Zur Lösung dieser Aufgabe wird ein Verfahren zum Steuern einer Raumtemperatur gemäß Anspruch 1, ein Heizungssystem zum Steuern einer Raumtemperatur gemäß Anspruch 14 und eine Steuervorrichtung zum Einsatz in einem Heizungssystem gemäß Anspruch 15 bereitgestellt.

Die jeweiligen abhängigen Ansprüche beziehen sich dabei auf bevorzugte Ausführungsformen, die jeweils für sich genommen oder in Kombination bereitgestellt werden können.

Gemäß eines ersten Aspekts der Erfindung wird Verfahren zum Steuern einer Raumtemperatur mittels eines auf einem hydraulischen Leitungsnetzwerk für ein Energietransportmedium basierenden Heizungssystems bereitgestellt Das Heizungssystem umfasst zumindest eine zum Temperieren des Energietransportmediums eingerichtete Wärmequellenvorrichtung, bei der es sich insbesondere um eine Wärmepumpenanlage handelt, eine einem ersten Raum zugeordnete, über das hydraulische Leitungsnetzwerk mit dem temperierten Energietransportmedium versorgte erste Wärmetauschvorrichtung, die zum Temperieren des ersten Raums eingerichtet ist, und eine einem vom ersten Raum abgetrennten, zweiten Raum zugeordnete, über das hydraulische Leitungsnetzwerk mit dem temperierten Energietransportmedium versorgte zweite Wärmetauschvorrichtung, die zum Temperieren des zweiten Raums eingerichtet ist. Das Verfahren umfasst dabei ein Bereitstellen einer Soll-Temperatur für den ersten Raum und einer Soll-Temperatur für den zweiten Raum, ein Erfassen einer Ist-Temperatur im ersten Raum und einer Ist-Temperatur im zweiten Raum, ein Ermitteln einer ersten Temperaturdifferenz zwischen der bereitgestellten Soll-Temperatur für den ersten Raum und der erfassten Ist-Temperatur im ersten Raum, ein Ermitteln einer zweiten Temperaturdifferenz zwischen der bereitgestellten Soll-Temperatur für den zweiten Raum und der erfassten Ist-Temperatur im zweiten Raum sowie ein Steuern einer Raumtemperatur im ersten Raum durch ein Einstellen eines eine Wärmetauschleistung im ersten Raum regulierenden Betriebsparameters der ersten Wärmetauschvorrichtung in Abhängigkeit der ermittelten ersten Temperaturdifferenz und durch ein Einstellen eines eine Wärmetauschleistung im zweiten Raum regulierenden Betriebsparameters der zweiten Wärmetauschvorrichtung in Abhängigkeit der ermittelten ersten Temperaturdifferenz und der ermittelten zweiten Temperaturdifferenz.

Unter der Raumtemperatur ist dabei üblicherweise die Lufttemperatur im betreffenden Raum zu verstehen.

Das erfindungsgemäße Verfahren ermöglicht in vorteilhafter Weise einen Vergleich der beiden Räume im Hinblick auf einen Energie- bzw. Leistungsbedarf im Zuge des Steuerns der Raumtemperatur, auf Basis dessen eine Priorisierung der Räume festgelegt werden kann.

So könnte beispielsweise im einfachsten Fall dem Raum mit der höheren Temperaturdifferenz zwischen Soll- und Ist-Temperatur eine erhöhte Priorität zugeordnet werden, da hier mit einem höheren Energie- bzw. Leistungsbedarf zum Erreichen der Soll-Temperatur zu rechnen ist. Besagte Priorisierung sei allerdings nicht als auf einen direkten Größenvergleich der Temperaturdifferenzen beschränkt zu verstehen, sondern kann ebenso durch Vergleiche auf Basis verschiedener Referenz- und/oder Grenzwerte erfolgen, wie im weiteren Verlauf beschrieben.

Darauf aufbauend setzt das erfindungsgemäße Verfahren besonders vorteilhaft ein Konzept eines zumindest teilweisen Umleitens eines durch die Wärmequellenvorrichtung zentral bereitgestellten Energieflusses, hier in Form des temperierten Energietransportmediums, auf Basis besagter Priorisierung um. Der durch die Wärmequellenvorrichtung bereitgestellte Energiefluss verteilt sich über das hydraulische Leitungsnetzwerk und wird entsprechend der Betriebsparameter der ersten und zweiten Wärmetauschvorrichtungen unter den selbigen aufgeteilt. Im Zuge des Steuerns der Raumtemperatur im ersten Raum kann somit besagter Energiefluss durch Einstellen des die Wärmetauschleistung regulierenden Betriebsparameters an der zweiten Wärmetauschvorrichtung zumindest anteilig von einem in den anderen Raum umgeleitet werden.

Wird beispielsweise für den ersten Raum auf Basis der ermittelten Temperaturdifferenzen ein höherer Energie- bzw. Leistungsbedarf festgestellt, so kann der die Wärmetauschleistung regulierende Betriebsparameter der zweiten Wärmetauschvorrichtung derart eingestellt werden, dass eine Wärmetauschleistung im zweiten Raum reduziert wird, wodurch sich die Aufteilung des zentral bereitgestellten Energieflusses dahingehend ändert, dass nun ein größerer Anteil des Energieflusses der ersten Wärmtauschvorrichtung zugeführt wird, um so ein schnelles Erreichen der Soll-Temperatur im ersten Raum zu begünstigen. Der der zweiten Wärmetauschvorrichtung zugeführte Energiefluss wird reduziert, um den der ersten Wärmetauchvorrichtung zugeführte Energiefluss zu erhöhen, ohne dabei einen Betriebszustand der Wärmequellenvorrichtung selbst zu ändern, insbesondere ohne deren Betriebsleistung zu erhöhen. In anderen Worten wird im geschilderten Beispiel der Energiefluss in den zweiten Raum zumindest teilweise in den ersten Raum umgeleitet, was zudem zusätzlich durch ein Einstellen des Betriebsparameters an der ersten Wärmetauschvorrichtung selbst unterstützt werden kann.

Im Extremfall kann die Wärmetauschleistung der zweiten Wärmetauschvorrichtung im zweiten Raum auf null gesetzt werden, sodass der bereitgestellte Energiefluss vollständig der ersten Wärmetauschvorrichtung zugeführt wird.

Nähert sich die Raumtemperatur im ersten Raum im Zuge des vorstehend beschriebenen Beispiels der gewünschten Soll-Temperatur an, so kann der Energiefluss durch Einstellen des Betriebsparameters der zweiten Wärmetauschvorrichtung wieder zumindest anteilig aus dem ersten Raum in den zweiten Raum umgeleitet werden, wodurch nicht nur ein Erhöhen der zweiten Temperaturdifferenz unterbunden wird, sondern auch ein Über-/Unterschwingen der Raumtemperatur im ersten Raum über/unter die gewünschte Soll-Temperatur unterbunden wird.

Mit Hilfe des erfindungsgemäßen Verfahrens kann somit ein besonders schnelles und komfortables Erreichen der Soll-Temperatur im ersten Raum bei zeitgleich energieeffizientem Betrieb des zum Temperieren einer Vielzahl von Räumen eingesetzten Heizungssystems erreicht werden, indem ein Einstellen des Betriebsparameters der zweiten Wärmetauschvorrichtung in Abhängigkeit der ermittelten ersten und zweiten Temperaturdifferenz in das Steuern der Raumtemperatur im ersten Raum miteinbezogen wird.

Der Ausdruck "in Abhängigkeit der ermittelten Temperaturdifferenz" ist dabei nicht als eine Beschränkung auf eine lediglich direkt proportionale Abhängigkeit von besagter Temperaturdifferenz zu verstehen, sondern es kann sich auch um eine beliebige Abhängigkeit handeln, die insbesondere in Form eines auf der Temperaturdifferenz beruhenden beliebigen mathematischen Ausdrucks angegeben werden kann, z. B. einer quadratischen Abweichung o. Ä..

Bei der Wärmequellenvorrichtung kann es sich um jedwede Vorrichtung handeln, die zum Temperieren des Energietransportmediums eingesetzt werden kann, so z. B. um eine zentrale Öl-/Gas- oder Pellet-Heizung oder eine Wärmepumpenanlage. Unter Temperieren kann dabei sowohl ein Aufheizen aber auch ein Abkühlen des Energietransportmediums verstanden werden.

Die Wärmequellenvorrichtung kann in einem Heizungsbetrieb betrieben werden, im Zuge dessen das Energietransportmedium aufgeheizt wird, um so den jeweiligen Räumen über die Wärmetauschvorrichtungen Wärmeenergie zuzuführen und die Raumtemperatur zu erhöhen.

Obgleich die Bezeichnung "Heizungssystem" gewählt wurde, ist die Wärmequellenvorrichtung jedoch nicht auf besagten Heizungsbetrieb beschränkt zu verstehen. Vorzugsweise kann die Wärmequellenvorrichtung alternativ oder zusätzlich auch in einem Kühlungsbetrieb betrieben werden (vorrangig in Form einer Wärmepumpenanlage), im Zuge dessen das Energietransportmedium abgekühlt wird, um so Wärmeenergie aus den jeweiligen Räumen über die Wärmetauschvorrichtungen abzuführen und die Raumtemperatur abzusenken.

Das Verfahren ist somit nicht auf den klassischen Fall des Heizungsbetriebs beschränkt, sondern kann im Hinblick auf eine abzusenkende Raumtemperatur, z. B. bei heißen Außentemperaturen im Sommer, auch im Zuge des Kühlungsbetriebs eingesetzt werden, sodass auch in diesem Fall ein energieeffizienter Betrieb des Heizungssystems umgesetzt wird.

Im Hinblick auf die verschiedenen möglichen Betriebsarten ist unter der Wärmetauschleistung dabei - je nach Betriebsart der Wärmequellenvorrichtung - ein Maß für die durch die jeweilige Wärmetauschvorrichtung dem Raum zugeführte (Heizungsbetrieb) oder aus dem Raum abgeführte Wärmeenergiemenge (Kühlungsbetrieb) im Zuge eines Wärmetauschs zwischen dem jeweiligen Raum und dem durch die jeweilige Wärmetauschvorrichtung strömenden Energietransportmediums zu verstehen.

Für den Fall multipler Betriebsarten der Wärmequellenvorrichtung (Heizungsbetrieb, Kühlungsbetrieb) bietet sich zudem das Einführen einer Vorzeichenkonvention bei der Definition der Temperaturdifferenzen ($\Delta T$) an. Als Beispiel hierfür sei die Vorzeichenkonvention gemäß Gleichung 1 genannt, die nachfolgend als Basis für die Definition weiterer Abhängigkeiten im Verfahren dienen soll.

$$\Delta T = \begin{cases} \Delta T_{\text{Soll}} = T_{\text{Soll}} - T_{\text{Ist}}, \text{ für Heizungsbetrieb (H)} \\ \Delta T_{\text{K}} = T_{\text{Ist}} - T_{\text{Soll}}, \text{ für Kühlungsbetrieb (K)} \end{cases} \qquad \text{[Gleichung 1]}$$

Ein positiver Wert der Temperaturdifferenz ($\Delta T$) gemäß Gleichung 1 bedeutet dabei, dass das der durch den jeweiligen Betrieb zu erreichende Sollwert noch nicht erreicht wurde, wohingegen ein negativer Wert der Temperaturdifferenz ($\Delta T$) bedeutet, dass der durch den jeweiligen Betrieb zu erreichende Sollwert bereits überschritten wurde.

Die Vorzeichenkonvention gemäß Gleichung 1 wurde vorstehend lediglich exemplarisch gewählt und ist nicht darauf beschränkt zu verstehen. Ebenso ist auch das Festlegen einer Vorzeichenkonvention keine zwingende Voraussetzung für die Anwendung des erfindungsgemäßen Verfahrens.

In einer besonders bevorzugten Ausführungsform sind die erste und die zweite Wärmetauschvorrichtung als Flächenwärmetauscher ausgeführt, die jeweils einen innerhalb eines Bodens und/oder innerhalb von Wänden und/oder innerhalb einer Decke des jeweiligen Raums angeordneten Heizkreis zur Durchleitung des Energietransportmediums umfassen. Zumindest im Falle des Bodens ist diese Ausführungsform allgemein auch als Fußbodenheizung bekannt.

Auf diese Weise wird dem Heizungssystem eine Art Zwischenspeicher hinzugefügt, was im Vergleich zu konventionellen, im Raum montierten Radiatoren bzw. Heizkörpern zu einer vergleichsweise höheren Trägheit in Bezug auf Änderungen der Raumtemperatur im Zuge des Steuerns der selbigen führt So weist das den Flächenwärmetauscher umgebende Mauerwerk - oder auch die Decke oder der Boden - eine höhere Wärmekapazität als die Raumluft auf und fungiert damit als besagter Zwischenspeicher für Wärme- oder Kälteenergie. Wird im Zuge des Steuerns der Raumtemperatur im ersten Raum beispielsweise eine Wärmetauschleistung der Wärmetauschvorrichtung im zweiten Raum reduziert, kommt es vorteilhafter Weise vorerst nicht zu einer drastischen Änderung der Raumtemperatur im zweiten Raum, da dieser nach wie vor von der im Mauerwerk, im Boden oder in der Decke gespeicherten Wärmeenergie (Kälteenergie im Kühlungsbetrieb) zehrt Infolgedessen ist es beim erfindungsgemäßen Umleiten des Energieflusses in den ersten Raum eben nicht oder zumindest nicht sofort notwendig, eine Betriebsleistung der Wärmequellenvorrichtung zu erhöhen, um so die Raumtemperatur im zweiten Raum konstant zu halten, da dies durch besagten Zwischenspeicher erfolgt Hierdurch wird ein besonders komfortables Steuern der Raumtemperatur(en) bei zeitgleich energieeffizientem Betrieb des Heizungssystems ermöglicht

Vorzugsweise sind sämtliche Wärmetauschvorrichtungen des Heizungssystems als Flächenwärmetauscher im Sinne der vorstehend beschriebenen Ausführungsform ausgeführt.

In einer besonders bevorzugten Ausführungsform handelt es sich bei den die Wärmetauschleistung regulierenden Betriebsparametern der ersten und der zweiten Wärmetauschvorrichtung um Durchflussmengen und/oder Volumenströme und/oder Strömungsgeschwindigkeiten des Energietransportmediums im jeweiligen Heizkreis regulierende Betriebsparameter, insbesondere handelt es sich jeweils um einen Öffnungsgrad eines dem Heizkreis der jeweiligen Wärmetauschvorrichtung zugeordneten Steuerungsventils.

Auf diese Weise wird eine vergleichsweise einfache und kostengünstige Möglichkeit zur Anpassung bzw. zum Einstellen der Wärmetauschleistung an den jeweiligen Wärmetauschvorrichtungen selbst bereitgestellt Üblicherweise umfassen die Steuerungsventile hierbei Stellmotoren, die basierend auf elektrischen Steuersignalen durch die Steuervorrichtung schrittweise oder kontinuierlich verstellt werden können und entweder auf Seiten des Vor- oder auf Seiten des Rücklaufs des Heizungssystems angeordnet sein können.

In einer besonders bevorzugten Ausführungsform ist zumindest der die Wärmetauschleistung im zweiten Raum regulierende Betriebsparameter der zweiten Wärmetauschvorrichtung stufenweise mit zumindest einer Zwischenstufe oder stufenlos zwischen einem vorbestimmten Mindestwert und einem vorbestimmten Maximalwert einstellbar. Vorzugsweise gilt dies auch für den Betriebsparameter der ersten Wärmetauschvorrichtung.

Auf diese Weise kann eine besonders exakte Anpassung der Wärmetauschleistung im zweiten Raum vorgenommen werden, wodurch im Vergleich zu einem rein binär einstellbaren Betriebsparameter (z. B. ein/aus bzw. offen/geschlossen) ein unter Umständen schneller Anstieg der Temperaturdifferenz bei Reduktion der Wärmetauschleistung vermieden werden kann.

Für den Fall, dass der Betriebsparameter der ersten Wärmetauschvorrichtung lediglich binär einstellbar ist, bietet das erfindungsgemäße Verfahren dabei die Möglichkeit, auch die Raumtemperatur im ersten Raum durch Einstellen des Betriebsparameters der zweiten Wärmetauschvorrichtung möglichst komfortabel zu steuern, um so beispielsweise ein Über-/Unterschwingen der Soll-Temperatur (für Heizungs-/Kühlungsbetrieb) zu unterbinden.

Ist beispielsweise das binär einstellbare Steuerungsventil der ersten Wärmetauschvorrichtung vollständig geöffnet, kann im Zuge der Annäherung der Raumtemperatur im ersten Raum an die Soll-Temperatur der Energiefluss in den ersten Raum durch schrittweises Öffnen des Steuerungsventils der zweiten Wärmetauschvorrichtung zumindest teilweise in den zweiten Raum umgeleitet werden, wodurch besagtes Über-/Unterschwingen im ersten Raum unterbunden wird.

In einer besonders bevorzugten Ausführungsform umfasst das Verfahren weiterhin ein Bereitstellen eines Grenzwertes zum Einstellen des die Wärmetauschleistung im zweiten Raum regulierenden Betriebsparameters der zweiten Wärmetauschvorrichtung, wobei im Zuge des Steuerns der Raumtemperatur im ersten Raum das Einstellen des die Wärmetauschleistung im zweiten Raum regulierenden Betriebsparameters der zweiten Wärmetauschvorrichtung derart erfolgt, dass die Wärmetauschleistung im zweiten Raum reduziert wird, falls die ermittelte zweite Temperaturdifferenz den bereitgestellten Grenzwert unterschreitet.

Auf diese Weise wird die Wärmetauschleistung der zweiten Wärmetauschvorrichtung reduziert, sobald sich die Raumtemperatur im zweiten Raum innerhalb eines durch den Grenzwert vorbestimmten Bereichs um die Soll-Temperatur des zweiten Raums befindet, wodurch eine zumindest teilweises Umleiten des Energieflusses des Heizungssystems in den ersten Raum erst dann erfolgt, wenn sich die Raumtemperatur im zweiten Raum in einem vorbestimmten, annehmbaren Wertebereich bewegt.

Der bereitgestellte Grenzwert kann hierbei von vornherein vorgegeben sein, oder im Zuge des Verfahrens in Abhängigkeit weiterer Verfahrensgrößen bestimmt werden, um so eine besonders flexible Steuerung auch für sich u. U. ändernde Soll-Temperaturen bereitzustellen.

In einer besonders bevorzugten Ausführungsform umfasst das Bereitstellen des Grenzwertes zum Einstellen des die Wärmetauschleistung im zweiten Raum regulierenden Betriebsparameters der zweiten Wärmetauschvorrichtung daher ein Ermitteln des Grenzwertes zumindest in Abhängigkeit der ermittelten ersten Temperaturdifferenz und ein Ausgeben des ermittelten Grenzwertes als bereitgestellter Grenzwert.

In der denkbar einfachsten Konstellation entspricht der ermittelte Grenzwert dabei der ersten Temperaturdifferenz, die wahlweise mit einer Toleranz beaufschlagt werden kann. In diesem Fall erfolgt ein zumindest teilweises Umleiten des Energieflusses des Heizungssystems in den ersten Raum, sobald dessen Temperaturdifferenz größer ausfällt als die Temperaturdifferenz im zweiten Raum, also ein akuter Energiebedarf (von Wärme-/Kälteenergie) im ersten Raum besteht

In einer besonders bevorzugten Ausführungsform entspricht der ermittelte Grenzwert dabei einem gewichteten oder einem ungewichteten Mittelwert aus der ermittelten ersten und der ermittelten zweiten Temperaturdifferenz.

Auf diese Weise ergibt sich eine raumübergreifende Betrachtung beim Bereitstellen des Grenzwertes im Zuge des erfindungsgemäßen Umleitens des Energieflusses, wodurch nicht nur ein robusteres Steuern der Raumtemperatur umgesetzt wird, was sich beim Einsatz des Verfahrens an einem Heizungssystem mit einer Vielzahl von Wärmetauschvorrichtungen (größer zwei) dahingehend von Vorteil erweist, dass ein raumübergreifendes, gleichmäßiges Erreichen der jeweiligen Soll-Temperaturen im Vordergrund steht

Vorzugsweise umfasst das Verfahren ferner ein Bereitstellen eines zweiten Grenzwertes zum Einstellen des die Wärmetauschleistung im zweiten Raum regulierenden Betriebsparameters der zweiten Wärmetauschvorrichtung, wobei im Zuge des Steuerns der Raumtemperatur im ersten Raum das Einstellen des die Wärmetauschleistung im zweiten Raum regulierenden Betriebsparameters der zweiten Wärmetauschvorrichtung derart erfolgt, dass die Wärmetauschleistung im zweiten Raum erhöht wird, falls die ermittelte erste Temperaturdifferenz den bereitgestellten zweiten Grenzwert unterschreitet

Auf diese Weise wird das zuvor beschriebene Über-/Unterschwingen der Raumtemperatur im ersten Raum bei Annäherung an die Soll-Temperatur auf besonders vorteilhafte Weise unterbunden, da mit Überschreiten des zweiten Grenzwerts ein teilweises Umleiten des bereits hinlänglich beschriebenen Energieflusses aus dem ersten in den zweiten Raum erfolgt. Bei besagtem zweiten Grenzwert handelt es sich beispielsweise und nicht beschränkend um eine fest vorgegebene Temperaturgrenze, die z. B. auf 0,5 °C gesetzt werden kann.

In einer bevorzugten Ausführungsform umfasst das Verfahren weiterhin ein Festlegen eines zulässigen Wertebereichs für den die Wärmetauschleistung im zweiten Raum regulierenden Betriebsparameter der zweiten Wärmetauschvorrichtung, der innerhalb eines Wertebereichs zwischen dem vorbestimmten Maximalwert und dem vorbestimmten Mindestwert liegt, wobei im Zuge des Steuerns der Raumtemperatur im ersten Raum das Einstellen des die Wärmetauschleistung im zweiten Raum regulierenden Betriebsparameters der zweiten Wärmetauschvorrichtung innerhalb des festgelegten zulässigen Wertebereichs erfolgt.

Auf diese Weise wird ein gegenüber dem tatsächlich möglichen Wertebereich begrenzter Wertebereich zum Einstellen des Betriebsparameters an der zweiten Wärmetauschvorrichtung festgesetzt. Es ist somit unter Umständen nicht mehr möglich, die zweite Wärmetauschvorrichtung unter Volllast zu betreiben, wodurch per se ein zumindest teilweises Umleiten des Energieflusses in den ersten Raum erfolgt Ferner erlaubt dieses Vorgehen eine besonders effektive Kombination mit einer Einzelraumregelung des zweiten Raums, im Zuge dessen die Steuervorrichtung lediglich den Wertebereich der Stellgröße im zweiten Raum beschränkt, diese aber nach wie vor auf Basis einer Einzelraumregelungsstrategie gesteuert werden kann.

In einer bevorzugten Ausführungsform umfasst das Festlegen des zulässigen Wertebereichs für den die Wärmetauschleistung im zweiten Raum regulierenden Betriebsparameter ein Ermitteln eines Referenzwertes zum Einstellen des die Wärmetauschleistung im zweiten Raum regulierenden Betriebsparameters zumindest in Abhängigkeit der ermittelten ersten Temperaturdifferenz, ein Ermitteln einer Obergrenze des zulässigen Wertebereichs auf Basis der ermittelten zweiten Temperaturdifferenz und dem ermittelten Referenzwert, wobei die Obergrenze für den Fall, dass die ermittelte zweite Temperaturdifferenz geringer ausfällt als der ermittelte Referenzwert, kleiner ist als der vorbestimmte Maximalwert und ein Ausgeben des Wertebereichs zwischen dem vorbestimmten Mindestwert und der ermittelten Obergrenze als zulässigen Wertebereich für den die Wärmetauschleistung im zweiten Raum regulierenden Betriebsparameter der zweiten Wärmetauschvorrichtung.

Auf diese Weise erfolgt das vorstehend beschriebene Beschränken des einstellbaren Wertebereichs des Betriebsparameters der zweiten Wärmetauschvorrichtung in Abhängigkeit der ermittelten Temperaturdifferenzen, um so ein möglichst adaptives und flexibles Steuern der Raumtemperatur zu ermöglichen. Sinkt die zweite Temperaturdifferenz unter den ermittelten Referenzwert, so wird der im Zuge des Verfahrens maximal einstellbare Wert des Betriebsparameters an der zweiten Wärmetauschvorrichtung herabgesetzt (auf besagte Obergrenze), wodurch sich die maximal einstellbare Wärmetauschleistung der zweiten Wärmetauschvorrichtung ebenfalls reduziert Das dadurch entstehende Energie- bzw. Leistungsdelta kann nun in vorteilhafter Weise an der ersten Wärmetauschvorrichtung eingesetzt werden, wobei die zweite Wärmetauschvorrichtung beispielsweise selbst weiterhin im Zuge einer Einzelraumregelung zum Steuern der Raumtemperatur im zweiten Raum angesteuert werden kann, allerdings mit reduziertem Wertebereich des zugehörigen Betriebsparameters.

Der Referenzwert kann dabei analog zu dem vorstehend beschriebenen Grenzwert zum Einstellen des die Wärmetauschleistung im zweiten Raum regulierenden Betriebsparameters ermittelt werden und entspricht beispielsweise der ersten Temperaturdifferenz oder einem Mittelwert aus den beiden Temperaturdifferenzen.

Auf diese Weise werden die aus dem Stand der Technik bekannten Vorteile einer Einzelraumregelung um eine raumübergreifende Betrachtungsweise ergänzt, wodurch eine besonders energieeffizientes Betreiben des Heizungssystems ermöglicht wird, ohne dabei auf den Komfort einer Einzelraumregelung zu verzichten.

In einer bevorzugten Ausführungsform erfolgt im Zuge des Festlegens des zulässigen Wertebereichs das Ermitteln der Obergrenze derart, dass mit steigender Differenz aus dem ermittelten Referenzwert und der ermittelten zweiten Temperaturdifferenz die Obergrenze relativ zum vorbestimmten Maximalwert reduziert wird.

Auf diese Weise wird ein adaptives Anpassen des einstellbaren Wertebereichs des Betriebsparameters der zweiten Wärmetauschvorrichtung bereitgestellt, im Zuge dessen oben beschriebenes Energie- bzw. Leistungsdelta erhöht wird, falls der Energie- bzw. Leistungsbedarf im ersten Raum ansteigt

Vorzugsweise wird zumindest das Erfassen von jeweiligen Ist-Temperaturen im ersten und im zweiten Raum, das Ermitteln von jeweiligen Temperaturdifferenzen zwischen der bereitgestellten Soll-Temperatur und der erfassten Ist-Temperatur des jeweiligen ersten und zweiten Raums und das Steuern der Raumtemperatur im ersten Raum in vordefinierten zeitlichen Abständen wiederholt.

Auf diese Weise können im Zuge des erfindungsgemäßen Verfahrens auch zeitliche Änderungen berücksichtigt werden, um so ein zeitkontinuierliches Steuern der Raumtemperatur zumindest im ersten Raum zu ermöglichen.

In einer bevorzugten Ausführungsform umfasst das Heizungssystem zusätzlich N weitere über das hydraulische Leitungsnetzwerk mit dem temperierten Energietransportmedium versorgte Wärmetauschvorrichtungen, die jeweils einem von N weiteren Räumen zugeordnet und zum Temperieren des jeweiligen weiteren Raums eingerichtet sind, wobei $N \geq 1$ gilt, und das Verfahren weiterhin umfasst ein Bereitstellen von jeweiligen Soll-Temperaturen für jeden der N weiteren Räume, ein Erfassen von jeweiligen Ist-Temperaturen für jeden der N weiteren Räume, ein Ermitteln von jeweiligen Temperaturdifferenzen zwischen der bereitgestellten Soll-Temperatur und der erfassten Ist-Temperatur für jeden der N weiteren Räumen, wobei das Steuern der Raumtemperatur im ersten Raum weiterhin für jeden der N weiteren Räume ein Einstellen eines eine Wärmetauschleistung im jeweiligen weiteren Raum regulierenden Betriebsparameters der dem jeweiligen Raum zugeordneten Wärmetauschvorrichtung in Abhängigkeit der ermittelten ersten und zweiten Temperaturdifferenzen sowie der ermittelten Temperaturdifferenzen in jedem der N weiteren Räume umfasst.

Auf diese Weise wird das erfindungsgemäße Verfahren in vorteilhafter Weise für den Einsatz mit einem Heizungssystem mit einer Vielzahl von Wärmetauschvorrichtungen erweitert, wodurch eine kollektive Betrachtung aller durch das Heizungssystem zu temperierenden Räume erfolgt und so eine besonders effizientes Umleiten des Energieflusses des Heizungssystems auf Basis besagter kollektiver Betrachtung erfolgt, um so das Heizungssystem besonders energieeffizient betreiben zu können.

In einer bevorzugten Ausführungsform umfasst das Steuern der Raumtemperatur im ersten Raum ein Einstellen einer Temperatur des durch die Wärmequellenvorrichtung temperierten Energietransportmediums zur Versorgung der Wärmetauschvorrichtungen und/oder ein Einstellen eines Volumenstroms des durch die Wärmequellenvorrichtung temperierten Energietransportmediums zur Versorgung der Wärmetauschvorrichtungen.

Auf diese Weise werden die möglichen Stellgrößen im Zuge des erfindungsgemäßen Verfahrens zum Steuern der Raumtemperatur um zumindest eine, insbesondere um zwei weitere Stellgrößen erweitert, die insbesondere in Abhängigkeit der ermittelten ersten und zweiten Temperaturdifferenz eingestellt werden können. So kann im Falle eines vergleichsweise groß ausfallenden Unterschieds zwischen der ersten und der zweiten Temperaturdifferenz der durch die Wärmequellenvorrichtung bereitgestellte Energiefluss an sich erhöht werden, um so in Kombination mit dem bereits hinlänglich beschriebenen Umleiten des Energieflusses ein schnelles Erreichen der gewünschten Soll-Temperaturen bei zeitgleich energieeffizientem Betrieb des Heizungssystems zu ermöglichen.

In einer bevorzugten Ausführungsform umfasst das Verfahren weiterhin ein Steuern einer Raumtemperatur im zweiten Raum durch ein Einstellen des die Wärmetauschleistung im zweiten Raum regulierenden Betriebsparameters der zweiten Wärmetauschvorrichtung in Abhängigkeit der ermittelten zweiten Temperaturdifferenz und durch ein Einstellen des die Wärmetauschleistung im ersten Raum regulierenden Betriebsparameters der ersten Wärmetauschvorrichtung in Abhängigkeit der ermittelten ersten Temperaturdifferenz und der ermittelten zweiten Temperarturdifferenz.

Das erfindungsgemäße Verfahren ist somit nicht als auf das Steuern der Raumtemperatur in einem einzelnen Raum des Gebäudes beschränkt zu verstehen, sondern kann auch in vorteilhafter Weise auf weitere Räume ausgedehnt werden.

Gemäß eines zweiten Aspekts der Erfindung wird ein Heizungssystem zum Steuern einer Raumtemperatur bereitgestellt, das auf einem hydraulischen Leitungsnetzwerk für ein Energietransportmedium basiert. Das Heizungssystem umfasst dabei zumindest eine zum Temperieren des Energietransportmediums eingerichtete Wärmequellenvorrichtung, eine einem ersten Raum zugeordnete, über das hydraulische Leitungsnetzwerk mit dem temperierten Energietransportmedium versorgte erste Wärmetauschvorrichtung, die zum Temperieren des ersten Raums eingerichtet ist, und eine einem vom ersten Raum abgetrennten, zweiten Raum zugeordnete, über das hydraulische Leitungsnetzwerk mit dem temperierten Energietransportmedium versorgte zweite Wärmetauschvorrichtung, die zum Temperieren des zweiten Raums eingerichtet ist, einen im ersten Raum angeordneten ersten Temperatursensor, einen im zweiten Raum angeordneten zweiten Temperatursensor und eine Steuervorrichtung, die zumindest mit der ersten und der zweiten Wärmetauschvorrichtung sowie mit dem ersten und dem zweiten Temperatursensor gekoppelt ist. Die Steuervorrichtung ist im Zuge eines Steuerns einer Raumtemperatur im ersten Raum mittels des Heizungssystems eingerichtet, einen eine Wärmetauschleistung im ersten Raum regulierenden Betriebsparameter der ersten Wärmetauschvorrichtung in Abhängigkeit einer durch die Steuervorrichtung ermittelten ersten Temperaturdifferenz zwischen einer durch den ersten Temperatursensor erfassten Ist-Temperatur und einer der Steuervorrichtung bereitgestellten Soll-Temperatur für den ersten Raum einzustellen sowie einen eine Wärmetauschleistung im zweiten Raum regulierenden Betriebsparameter der zweiten Wärmetauschvorrichtung in Abhängigkeit der ermittelten ersten Temperaturdifferenz sowie in Abhängigkeit einer durch die Steuervorrichtung ermittelten zweiten Temperaturdifferenz zwischen einer durch den zweiten Temperatursensor erfassten Ist-Temperatur und einer der Steuervorrichtung bereitgestellten Soll-Temperatur für den zweiten Raum einzustellen.

Das Heizungssystem gemäß des zweiten Aspekts ist damit zur Umsetzung des Verfahrens gemäß des ersten Aspekts eingerichtet und bietet damit alle bereits im Zuge der Verfahrensbeschreibung genannten Vorteile, die nachstehend nicht nochmals aufgeführt werden.

Vorzugsweise erfolgt das Bereitstellen der Soll-Temperaturen an der Steuervorrichtung durch jeweilige Sollwertgeber des Heizungssystems, die entweder als Teil der Steuervorrichtung ausgeführt sein können und/oder aber in dem jeweiligen Raum selbst angeordnet sein können. Auf diese Weise können Bewohner des Gebäudes die gewünschten Raumtemperaturen direkt im Raum, z. B. über ein Wandthermostat, oder zentral, z. B. über eine zentrale Bedienoberfläche der Steuervorrichtung, einstellen. Vorzugsweise sind Sollwertgeber und Temperatursensor eines Raumes gemeinsam in einer einheitlichen Thermostateinheit ausgeführt.

Vorzugsweise sind die erste und die zweite Wärmetauschvorrichtung des Heizungssystems als Flächenwärmetauscher ausgeführt, die jeweils einen innerhalb eines Bodens und/oder innerhalb von Wänden und/oder innerhalb einer Decke des jeweiligen Raums angeordneten Heizkreis zur Durchleitung des Energietransportmediums umfassen.

Vorzugsweise umfassen die als Flächenwärmetauscher ausgeführte erste und zweite Wärmetauschvorrichtung ein dem jeweiligen Heizkreis zugeordnetes, durch die Steuervorrichtung einstellbares Steuerungsventil zum Anpassen einer Durchflussmenge und/oder eines Volumenstroms und/oder einer Strömungsgeschwindigkeit des Energietransportmediums im betreffenden Heizkreis, wobei es sich bei den durch die Steuervorrichtung einzustellenden Betriebsparametern der ersten und zweiten Wärmetauschvorrichtungen im Zuge des Steuerns der Raumtemperatur im ersten Raum insbesondere um Öffnungsgrade besagter Steuerungsventile handelt

Vorzugsweise umfasst das Heizungssystem zusätzlich N weitere über das hydraulische Leitungsnetzwerk mit dem temperierten Energietransportmedium versorgte und mit der Steuervorrichtung gekoppelte Wärmetauschvorrichtungen, die jeweils einem von N weiteren Räumen zugeordnet und zum Temperieren des jeweiligen weiteren Raums eingerichtet sind, sowie N weitere, mit der Steuervorrichtung gekoppelte Temperatursensoren, die jeweils einem von N weiteren Räumen zugeordnet sind, wobei $N \geq 1$ gilt. Die Steuervorrichtung ist dabei dazu eingerichtet im Zuge des Steuerns der Raumtemperatur im ersten Raum einen eine Wärmetauschleistung im jeweiligen weiteren Raum regulierenden Betriebsparameter der dem jeweiligen Raum zugeordneten Wärmetauschvorrichtung in Abhängigkeit der ermittelten ersten und zweiten Temperaturdifferenzen sowie der ermittelten Temperaturdifferenzen in jedem der N weiteren Räume einzustellen.

Vorzugsweise ist die Steuervorrichtung des Heizungssystems dazu eingerichtet, im Zuge des Steuerns der Raumtemperatur im ersten Raum das Einstellen des die Wärmetauschleistung im zweiten Raum regulierenden Betriebsparameters der zweiten Wärmetauschvorrichtung derart vorzunehmen, dass die Wärmetauschleistung im zweiten Raum reduziert wird, falls die ermittelte zweite Temperaturdifferenz einen der Steuervorrichtung bereitgestellten Grenzwert zum Einstellen des die Wärmetauschleistung im zweiten Raum regulierenden Betriebsparameters der zweiten Wärmetauschvorrichtung unterschreitet

Vorzugsweise ist die Steuervorrichtung dabei ferner dazu eingerichtet, besagten Grenzwert im Zuge des Bereitstellens des selbigen zumindest in Abhängigkeit der ermittelten ersten Temperaturdifferenz zu ermitteln, wobei der besagte Grenzwert insbesondere der ersten Temperaturdifferenz selbst oder einem gewichteten oder einem ungewichteten Mittelwert aus der ermittelten ersten und der ermittelten zweiten Temperaturdifferenz entspricht

Vorzugsweise ist die Steuervorrichtung des Heizungssystems dazu eingerichtet, einen zulässigen Wertebereichs für den die Wärmetauschleistung im zweiten Raum regulierenden Betriebsparameter der zweiten Wärmetauschvorrichtung, der innerhalb eines Wertebereichs zwischen dem vorbestimmten Maximalwert und dem vorbestimmten Mindestwert, festzulegen, wobei im Zuge des Steuerns der Raumtemperatur im ersten Raum das Einstellen des die Wärmetauschleistung im zweiten Raum regulierenden Betriebsparameters der zweiten Wärmetauschvorrichtung durch die Steuervorrichtung innerhalb des festgelegten zulässigen Wertebereichs erfolgt.

Vorzugsweise ist die Steuervorrichtung des Heizungssystems im Zuge des Festlegens des zulässigen Wertebereichs für den die Wärmetauschleistung im zweiten Raum regulierenden Betriebsparameter einen Referenzwert zum Einstellen des die Wärmetauschleistung im zweiten Raum regulierenden Betriebsparameters zumindest in Abhängigkeit der ermittelten ersten Temperaturdifferenz zu ermitteln, eine Obergrenze des zulässigen Wertebereichs auf Basis der ermittelten zweiten Temperaturdifferenz und dem ermittelten Referenzwert zu ermitteln, wobei die Obergrenze für den Fall, dass die ermittelte zweite Temperaturdifferenz geringer ausfällt als der ermittelte Referenzwert, kleiner ist als der vorbestimmte Maximalwert, und den Wertebereich zwischen dem vorbestimmten Mindestwert und der ermittelten Obergrenze als zulässigen Wertebereich für den die Wärmetauschleistung im zweiten Raum regulierenden Betriebsparameter der zweiten Wärmetauschvorrichtung festzulegen.

Vorzugsweise ist die Steuervorrichtung des Heizungssystems ferner mit der Wärmequellenvorrichtung gekoppelt und dazu eingerichtet, im Zuge des Steuerns der Raumtemperatur im ersten Raum eine Temperatur und/oder einen Volumenstrom des durch die Wärmequellenvorrichtung temperierten Energietransportmediums zur Versorgung der Wärmetauschvorrichtungen einzustellen, wobei dies insbesondere in Abhängigkeit der an der Steuervorrichtung vorliegenden ersten und zweiten Temperaturdifferenz erfolgt.

Vorzugsweise ist die Steuervorrichtung im Zuge eines Steuerns einer Raumtemperatur im zweiten Raum mittels des Heizungssystems dazu eingerichtet, den die Wärmetauschleistung im zweiten Raum regulierenden Betriebsparameter der zweiten Wärmetauschvorrichtung in Abhängigkeit der durch die Steuervorrichtung ermittelten zweiten Temperaturdifferenz einzustellen sowie den die Wärmetauschleistung im ersten Raum regulierenden Betriebsparameter der ersten Wärmetauschvorrichtung in Abhängigkeit der ermittelten ersten und der ermittelten zweiten Temperaturdifferenz einzustellen.

Gemäß eines dritten Aspekts der Erfindung wird eine Steuervorrichtung zum Einsatz in einem Heizungssystem gemäß des zweiten Aspekts der Erfindung bereitgestellt.

Auf diese Weise wird eine Nachrüstmöglichkeit bereitgestellt, über die ein bereits bestehendes Heizungssystem auf einfache und kostengünstige Weise mit der Steuervorrichtung nachgerüstet werden kann, um dieses um die vorteilhaften Funktionalitäten des Heizungssystems gemäß des zweiten Aspekts im Sinne des Verfahrens gemäß des ersten Aspekts zu erweitern.

Weitere Aspekte und deren Vorteile als auch speziellere Ausführungsbeispiele der zuvor genannten Aspekte und Merkmale werden im Folgenden unter Zuhilfenahme der in den beigefügten Figuren gezeigten Zeichnungen beschrieben.

Fig. 1 zeigt ein Ablaufdiagramm eines Ausführungsbeispiels des erfindungsgemäßen Verfahrens zum Steuern einer Raumtemperatur.

Fig. 2 zeigt qualitativ beispielhafte Verläufe verschiedener im Zuge des erfindungsgemäßen Verfahrens zum Steuern einer Raumtemperatur erfasster oder zu steuernder Größen.

Fig. 3 zeigt eine schematische Ansicht eines Ausführungsbeispiels des erfindungsgemäßen Heizungssystems.

Es wird hervorgehoben, dass die vorliegende Erfindung in keiner Weise auf die nachfolgend beschriebenen Ausführungsbeispiele und deren Ausführungsmerkmale begrenzt ist Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

**Ausführliche Figurenbeschreibung**

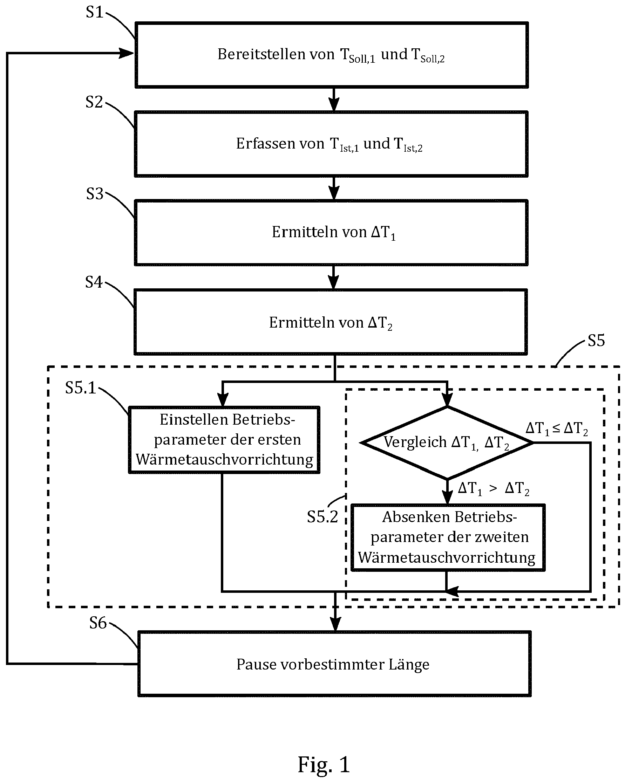

Fig. 1 zeigt ein Ablaufdiagramm eines Ausführungsbeispiels des erfindungsgemäßen Verfahrens zum Steuern einer Raumtemperatur mittels des auf einem hydraulischen Leitungsnetzwerk für ein Energietransportmedium basierenden Heizungssystems mit einer Wärmequellenvorrichtung, einer einem ersten Raum zugeordneten ersten Wärmetauschvorrichtung und einer einem zweiten Raum zugeordneten zweiten Wärmetauschvorrichtung.

In Schritt S1 erfolgt ein Bereitstellen einer Soll-Temperatur $T_{Soll,1}$ für den ersten Raum und einer Soll-Temperatur $T_{Soll,2}$ für den zweiten Raum.

In Schritt S2 erfolgt ein Erfassen einer Ist-Temperatur $T_{Ist,1}$ im ersten Raum und einer Ist-Temperatur $T_{Ist,2}$ im zweiten Raum.

In Schritt S3 erfolgt ein Ermitteln einer ersten Temperaturdifferenz $\Delta T_1$ zwischen der bereitgestellten Soll-Temperatur $T_{Soll,1}$ für den ersten Raum und der erfassten Ist-Temperatur $T_{Ist,1}$ im ersten Raum.

In Schritt S4 erfolgt ein Ermitteln einer zweiten Temperaturdifferenz $\Delta T_2$ zwischen der bereitgestellten Soll-Temperatur $T_{Soll,2}$ für den zweiten Raum und der erfassten Ist-Temperatur $T_{Ist,2}$ im zweiten Raum.

Die Temperaturdifferenzen werden hierbei beispielsweise unter Einhaltung der Vorzeichenkonvention gemäß Gleichung 1 bestimmt.

In Schritt S5 erfolgt ein Steuern einer Raumtemperatur im ersten Raum durch eine Kombination des Schrittes S5.1, eines Einstellens eines eine Wärmetauschleistung im ersten Raum regulierenden Betriebsparameters der ersten Wärmetauschvorrichtung in Abhängigkeit der ermittelten ersten Temperaturdifferenz $\Delta T_1$, und des Schrittes S5.2, eines Einstellen eines eine Wärmetauschleistung im zweiten Raum regulierenden Betriebsparameters der zweiten Wärmetauschvorrichtung in Abhängigkeit der ermittelten ersten Temperaturdifferenz $\Delta T_1$ und der ermittelten zweiten Temperaturdifferenz $\Delta T_2$.

Entsprechend des vorliegenden Ausführungsbeispiels erfolgt in Schritt S5.2 ein Reduzieren der Wärmetauschleistung durch Absenken des Betriebsparameters der zweiten Wärmetauschvorrichtung, falls die zweite Temperaturdifferenz $\Delta T_2$ aus Schritt S4 kleiner ausfällt als die erste Temperaturdifferenz $\Delta T_1$ aus Schritt S3. Ein Absenken des Betriebsparameters entspricht dabei einer Reduktion der Wärmetauschleistung.

Der Schritt des Einstellens des Betriebsparameters der zweiten Wärmetauschvorrichtung gemäß des erfindungsgemäßen Verfahrens ist dabei nicht als auf die exemplarische Vorgehensweise gemäß Schritt S5.2 beschränkt zu verstehen.

Im Anschluss an Schritt S5 erfolgt in Schritt S6 optional eine zeitliche Pause mit vorgegebener Länge, bevor ein erneuter Durchlauf des dargestellten Ablaufs beginnend mit Schritt S1 erfolgt.

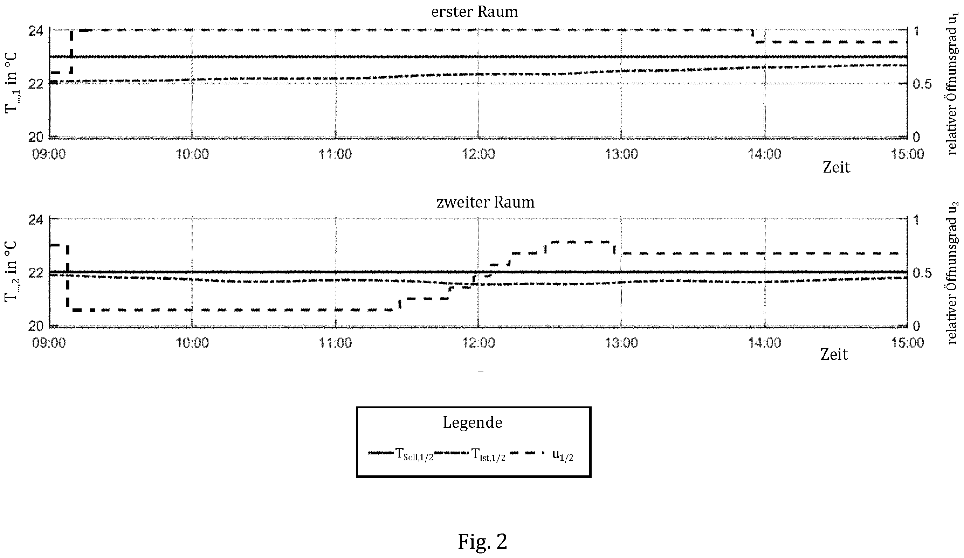

Fig. 2 zeigt qualitativ beispielhafte Verläufe verschiedener im Zuge des erfindungsgemäßen Verfahrens zum Steuern einer Raumtemperatur erfasster oder zu steuernder Größen in einem Diagramm für einen ersten Raum (oberer Teil von Fig. 2) und in einem Diagramm für einen zweiten Raum (unterer Teil von Fig. 2) unter Einsatz eines entsprechenden Heizungssystems mit zwei Wärmetauschvorrichtung zum jeweiligen Temperieren des ersten und des zweiten Raums.

In beiden Diagrammen sind für einen Heizungsbetrieb einer Wärmequellenvorrichtung des Heizungssystems jeweils über die Zeit eine gewünschte Soll-Temperatur $T_{Soll,1/2}$ (durchgezogene Linie), eine Ist-Temperatur $T_{Ist,1/2}$ (punktgestrichene Linie) und ein relativer Öffnungsgrad $u_{1/2}$ eines Steuerungsventils (also auf den Wertebereich von 0 bis 1 normiert, wobei für $u_{1/2} = 0$ geschlossen und für $u_{1/2} = 1$ vollständig geöffnet) einer jeweiligen Wärmetauchvorrichtung (gestrichelte Linie) dargestellt.

Zu Beginn der Zeitskala bei 9:00 Uhr fällt eine Temperaturdifferenz zwischen Soll-Temperatur und Ist-Temperatur im ersten Raum größer aus als im zweiten Raum. Infolgedessen erfolgt kurz nach 9:00 Uhr im Zuge des erfindungsgemäßen Verfahrens ein Einstellen der die jeweilige Wärmetauschleistung der Wärmetauschvorrichtungen regulierenden Betriebsparameter, hier der relativen Öffnungsgrade $u_{1/2}$ der Steuerungsventile, derart, dass das Steuerungsventil der Wärmetauschvorrichtung im ersten Raum (erste Wärmetauschvorrichtung) maximal geöffnet wird, wohingegen der Öffnungsgrad $u_2$ des Steuerungsventils der Wärmetauschvorrichtung im zweiten Raum (zweite Wärmetauschvorrichtung) reduziert wird.

Auf diese Weise erfolgt das konzeptionell beschriebene, zumindest teilweise Umleiten eines Energieflusses in den ersten Raum, um den dort höher ausfallenden Energie- bzw. Leistungsbedarf zum Erreichen der Soll-Temperatur $T_{Soll,1}$ abzudecken. Genauer gesagt führt die Kombination aus vermindertem Öffnungsgrad $u_2$ und erhöhtem Öffnungsgrad $u_1$ zu einem ansteigenden Volumenstrom des Energietransportmediums in der ersten Wärmetauschvorrichtung, allerdings auch zu einem verringerten Volumenstrom des Energietransportmediums in der zweiten Wärmetauschvorrichtung, ohne dabei eine Betriebsleistung der Wärmequellenvorrichtung erhöhen zu müssen. Infolgedessen kommt es zu einem vergleichsweise starken Anstieg der Ist-Temperatur $T_{Ist,1}$ im ersten Raum, allerdings auch zu einem Abfall der Ist-Temperatur $T_{Ist,2}$ im zweiten Raum.

Um einem zu starken Abfall der Ist-Temperatur $T_{Ist,2}$ im zweiten Raum entgegenzuwirken wird das Steuerungsventil der zweiten Wärmetauschvorrichtung gegen 11:30 Uhr wieder schrittweise geöffnet. Infolgedessen wird besagter Abfall abgedämpft, wohingegen der Anstieg der Ist-Temperatur $T_{Ist,1}$ im ersten Raum leicht abgeschwächt wird.

Um ein jeweiliges Überschwingen der Ist-Temperaturen zu unterdrücken erfolgt im späteren Verlauf eine Drosselung der Steuerungsventile der ersten und der zweiten Wärmetauschvorrichtung um ca. 13:00 Uhr im zweiten Raum und um ca. 14:00 Uhr im ersten Raum.

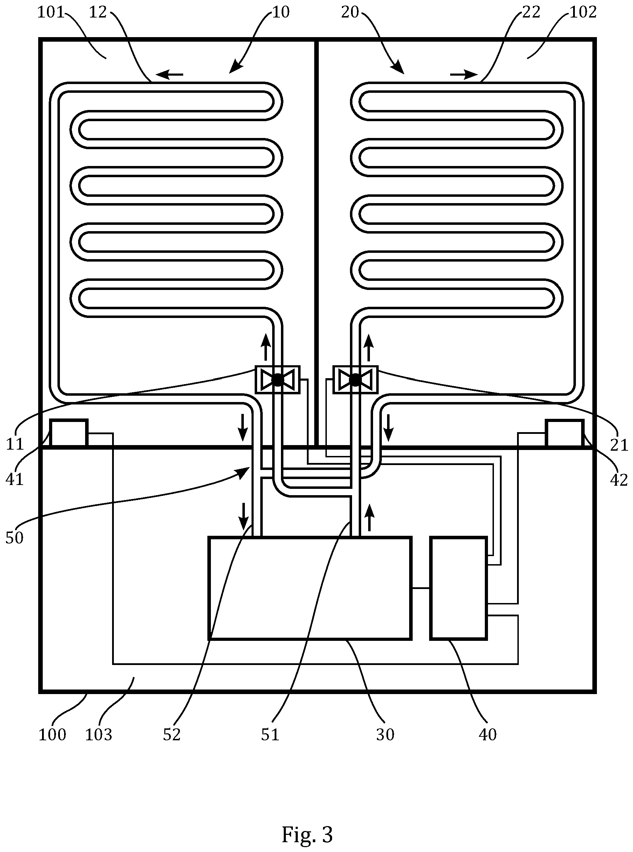

Die vorstehend diskutierten Verläufe in Fig. 3 zeigen, dass das erfindungsgemäße Verfahren eine vorteilhafte Möglichkeit bietet, die Soll-Temperatur $T_{Soll,1}$ im ersten Raum vergleichsweise schnell zu erreichen und dabei das Heizungssystems möglichst energieeffizient zu betreiben, wobei eine ganzheitliche Betrachtung aller durch das Heizungssystem zu temperierender Räume erfolgt

Fig. 3 zeigt eine schematische Ansicht eines Ausführungsbeispiels des erfindungsgemäßen Heizungssystems beim Einsatz in einem Gebäude 100.

Das Gebäude 100 umfasst hier exemplarisch drei Räume 101, 102, 103, von denen ein erster Raum 101 und ein zweiter Raum 102 mit Hilfe des Heizungssystems temperiert werden sollen. Der dritte Raum 103 dient im vorliegenden Ausführungsbeispiel als Heizungsraum zur Unterbringung von ein oder mehreren Komponenten des Heizungssystems.

Das Heizungssystem umfasst eine als Wärmepumpenanlage 30 ausgeführte Wärmequellenvorrichtung, ein hydraulisches Leitungsnetzwerk 50, eine als ersten Flächenwärmetauscher 10 ausgeführte erste Wärmetauschvorrichtung im ersten Raum 101, einen als zweiten Flächenwärmetauscher 20 ausgeführte zweite Wärmetauschvorrichtung im zweiten Raum 102, einen im ersten Raum 101 angeordneten ersten Temperatursensor 41, einen im zweiten Raum 102 angeordneten zweiten Temperatursensor 42 sowie eine Steuervorrichtung 40.

Die Wärmepumpenanlange 30 ist zum Temperieren eines im Heizungssystems verwendeten Energietransportmediums eingerichtet, wobei dieses im Zuge eines Heizungsbetriebs erwärmt werden kann oder im Zuge eines Kühlungsbetriebes abgekühlt werden kann. Das Heizungssystem ist allerdings nicht auf die besagte Wärmepumpenanlage 30 beschränkt, sondern es können auch andere Wärmequellenvorrichtungen zum Einsatz kommen, wie z. B. eine Öl-, Gas- oder Pellet-Heizung.

Die Wärmepumpenanlage 30 ist üblicherweise mit einer außerhalb des Gebäudes angeordneten geo- oder aerothermischen Wärmequellenanlage verbunden, die in Fig. 3 allerdings nicht dargestellt ist

Die Wärmepumpenanlage 30 ist über ein hydraulisches Leitungsnetzwerk 50 mit dem ersten Flächenwärmetauscher 10 und dem zweiten Flächenwärmetauscher 20 verbunden, um diese mit dem temperierten Energietransportmedium zu versorgen. Hierzu sind jeweilige Zulaufstellen des ersten und des zweiten Flächenwärmetauschers 10, 20 mit einem zentralen Vorlauf 51 verbunden, über den das durch die Wärmepumpenanlage 30 temperierte Energietransportmedium ins hydraulische Leitungsnetzwerk 51 eingespeist wird.

Bei der Kombination aus hydraulischen Leitungsnetzwerk 50 und Flächenwärmetauschern 10, 20 handelt es sich üblicherweise um einen geschlossenen Kreislauf für das Energietransportmedium. Folglich fließt das zum Temperieren der Räume 101, 102 eingesetzte Energietransportmedium über den zentralen Rücklauf 52 zurück in die Wärmepumpenanlage, um dort wieder temperiert und dem hydraulischen Leitungsnetzwerk 50 über den Vorlauf 51 wieder zugeführt zu werden.

Fließrichtungen des Energietransportmediums sind in Fig. 3 durch die jeweiligen Pfeilrichtungen angegeben.

Der erste Flächenwärmetauscher 10 umfasst einen innerhalb des Bodens des ersten Raums 101 angeordneten, schleifenförmig verlegten hydraulischen Heizkreis 12 zur Durchleitung des Energietransportmediums (Fußbodenheizung) sowie ein dem Heizkreis 12 - bezogen auf die Fließrichtung - vorgeschaltetes, vorzugsweise stufenlos einstellbares Steuerungsventil 11. Der Volumenstrom des durch den Heizkreis 12 strömenden Energietransportmediums wird dabei durch einen Öffnungsgrad des Steuerungsventils 11 beeinflusst Ist das Steuerungsventil 11 geschlossen, so ist ein Volumenstrom im Heizkreis 12 gleich null. Die Position des Steuerungsventils 11 ist dabei nicht auf die Vorlaufseite beschränkt, sondern kann sich auch auf Seiten des Rücklaufs befinden.

Der Aufbau des zweiten Flächenwärmetauschers 20 im zweiten Raum 102 mit zugehörigem hydraulischen Heizkreis 22 und Steuerungsventil 21 entspricht im Wesentlichen dem des ersten Flächenwärmetauschers 10.

Je nach Öffnungsgrad der beiden Steuerungsventile 11, 21 verteilt sich ein über den Vorlauf 51 bereitgestellter Volumenstrom des Energietransportmediums auf die beiden Heizkreise 12, 22. Ist im Extremfall eines der beiden Steuerungsventile 11 oder 21 geschlossen, strömt das gesamte Energietransportmedium vom Vorlauf 51 direkt durch den jeweils offenen Heizkreis 22 oder 12.

Die Temperatursensoren 41, 42 sind zum Messen einer Raumtemperatur bzw. einer Lufttemperatur im jeweiligen Raum 101, 102 eingerichtet und umfassen vorzugsweise jeweils einen Sollwertgeber zur Eingabe einer gewünschten Soll-Temperatur im ersten und zweiten Raum 101, 102 durch einen Benutzer.

Die Steuervorrichtung 40 ist zum Steuern des Heizungssystems eingerichtet und ist hierzu mit der Wärmepumpenanlage 30, den Steuerungsventilen 11, 12 und den Temperatursensoren 41, 42 gekoppelt Vorliegend erfolgt die Kopplung kabelgebunden, kann aber auch auf Basis drahtloser Übertragungsmittel erfolgen.

Im Zuge des Steuerns einer Raumtemperatur im ersten Raum 101 durch die Steuervorrichtung 40 mittels des Heizungssystems ist diese eingerichtet, einen Öffnungsgrad des Steuerungsventils 11 des ersten Flächenwärmetauschers 10, also eines eine Wärmetauschleistung im ersten Raum 101 regulierenden Betriebsparameters des ersten Flächenwärmetauschers 10, in Abhängigkeit einer durch die Steuervorrichtung 40 ermittelten ersten Temperaturdifferenz zwischen einer der Steuervorrichtung 40 bereitgestellten Soll-Temperatur für den ersten Raum 101 und einer und einer durch den ersten Temperatursensor 41 erfassten Ist-Temperatur einzustellen. Ferner ist die Steuervorrichtung im Zuge des Steuerns der Raumtemperatur im ersten Raum 101 zusätzlich eingerichtet, einen Öffnungsgrad des Steuerungsventils 21 des zweiten Flächenwärmetauschers 20, also eines eine Wärmetauschleistung im zweiten Raum 102 regulierenden Betriebsparameters des zweiten Flächenwärmetauschers 20, in Abhängigkeit der ermittelten ersten Temperaturdifferenz sowie in Abhängigkeit einer durch die Steuervorrichtung 40 ermittelten zweiten Temperaturdifferenz zwischen einer der Steuervorrichtung 40 bereitgestellten Soll-Temperatur für den zweiten Raum 102 und einer durch den zweiten Temperatursensor 42 erfassten Ist-Temperatur einzustellen.

Im einfachsten Fall ist die Steuervorrichtung dazu eingerichtet, das Steuerungsventil 21 des zweiten Flächenwärmetauschers 20 teilweise zu schließen (den Öffnungsgrad also zu senken), für den Fall, dass die zweite Temperaturdifferenz kleiner ausfällt als ein bereitgestellter Grenzwert, bei dem sich vereinfacht und nicht beschränkend um die ermittelte erste Temperaturdifferenz handeln kann. In diesem Fall wäre ein Energie- bzw. Leistungsbedarf im ersten Raum 101 größer einzustufen als im zweiten Raum 102, dessen Raumtemperatur bereits näher an der Soll-Temperatur liegt. Durch das teilweise Schließen des Steuerungsventils 21 sinkt der Volumenstrom im Heizkreis 22 des zweiten Flächenwärmetauschers 20 und der Volumenstrom im Heizkreis 12 des ersten Flächenwärmetauschers 10 steigt an (z. B. auch bei unverändert angenommenem Öffnungsgrad des Steuerungsventils 11), sodass eine Energiezufuhr durch das temperierte Energietransportmedium im ersten Raum 101 ansteigt, ohne einen Betriebszustand der Wärmepumpenanlage 30 selbst verändern zu müssen, z. B. durch Erhöhen einer Betriebsleistung der selbigen.

Auf diese Weise wird das vorstehend bereits mehrfach beschriebene Konzept des zumindest teilweisen Umleitens eines Energieflusses vom zweiten Raum 102 in den ersten Raum 101 mit dem als höher eingestuften Energiebedarf umgesetzt

Durch das beschriebene Heizungssystem wird somit eine Steuerung der Raumtemperatur im ersten Raum 101 ermöglicht, die nicht nur ein möglichst schnelles Erreichen der Soll-Temperatur in dem selbigen ermöglicht, sondern dabei auch ein besonders energieeffizientes Betreiben des Heizungssystems erlaubt.

Vorstehend wurden Ausführungsbeispiele der vorliegenden Erfindung sowie deren Vorteile detailliert unter Bezugnahme auf die beigefügten Figuren beschrieben.

Abschließend wird erneut hervorgehoben, dass die vorliegende Erfindung in keiner Weise auf die vorstehend beschriebenen Ausführungsbeispiele und deren Ausführungsmerkmale begrenzt ist Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

**Liste der Bezugszeichen**

| 10 | Flächenwärmetauscher im ersten Raum (erster Flächenwärmetauscher) |
| 11 | Steuerungsventil des ersten Flächenwärmetauschers |
| 12 | hydraulischer Heizkreis im ersten Raum |

| 20 | Flächenwärmetauscher im zweiten Raum (zweiter Flächenwärmetauscher) |
| 21 | Steuerungsventil des zweiten Flächenwärmetauschers |
| 22 | hydraulischer Heizkreis im zweiten Raum |
| 30 | Wärmepumpenanlage |
| 40 | Steuervorrichtung |
| 41 | erster Temperatursensor |
| 42 | zweiter Temperatursensor |
| 50 | hydraulisches Leitungsnetzwerk |
| 51 | Vorlauf |
| 52 | Rücklauf |
| 100 | Gebäude |
| 101 | erster Raum |
| 102 | zweiter Raum |
| 103 | Heizungsraum |
| $T_{Ist,1}$, $T_{Ist,2}$ | Ist-Temperaturen für den ersten und den zweiten Raum |
| $T_{Soll,1}$, $T_{Soll,2}$ | Soll-Temperaturen für den ersten und den zweiten Raum |
| $\Delta T$, $\Delta T_1$, $\Delta T_2$ | Temperaturdifferenzen |
| $u_1$, $u_2$ | relativer Öffnungsgrad der Steuerungsventile |

**Patentansprüche**

1. Verfahren zum Steuern einer Raumtemperatur mittels eines auf einem hydraulischen Leitungsnetzwerk (50) für ein Energietransportmedium basierenden Heizungssystems, das zumindest umfasst:

 - eine zum Temperieren des Energietransportmediums eingerichtete Wärmequellenvorrichtung (30);
 - eine einem ersten Raum (101) zugeordnete, über das hydraulische Leitungsnetzwerk (50) mit dem temperierten Energietransportmedium versorgte erste Wärmetauschvorrichtung (10), die zum Temperieren des ersten Raums (101) eingerichtet ist; und
 - eine einem vom ersten Raum (101) abgetrennten, zweiten Raum (102) zugeordnete, über das hydraulische Leitungsnetzwerk (50) mit dem temperierten Energietransportmedium versorgte zweite Wärmetauschvorrichtung (20), die zum Temperieren des zweiten Raums (102) eingerichtet ist;

 wobei das Verfahren umfasst:

 - Bereitstellen einer Soll-Temperatur ($T_{Soll,1}$) für den ersten Raum (101) und einer Soll-Temperatur ($T_{Soll,2}$) für den zweiten Raum (102);
 - Erfassen einer Ist-Temperatur ($T_{Ist,1}$) im ersten Raum (101) und einer Ist-Temperatur ($T_{Ist,2}$) im zweiten Raum (102);
 - Ermitteln einer ersten Temperaturdifferenz ($\Delta T_1$) zwischen der bereitgestellten Soll-Temperatur ($T_{Soll,1}$) für den ersten Raum (101) und der erfassten Ist-Temperatur ($T_{Ist,1}$) im ersten Raum (101);
 - Ermitteln einer zweiten Temperaturdifferenz ($\Delta T_2$) zwischen der bereitgestellten Soll-Temperatur ($T_{Soll,2}$) für den zweiten Raum (102) und der erfassten Ist-Temperatur ($T_{Ist,2}$) im zweiten Raum (102);
 - Steuern einer Raumtemperatur im ersten Raum (101) durch:

 - Einstellen eines eine Wärmetauschleistung im ersten Raum (101) regulierenden Betriebsparameters ($u_1$) der ersten Wärmetauschvorrichtung (10) in Abhängigkeit der ermittelten ersten Temperaturdifferenz ($\Delta T_1$);

 **dadurch gekennzeichnet, dass**
 das Steuern der Raumtemperatur im ersten Raum (101) zusätzlich umfasst:

 - Einstellen eines eine Wärmetauschleistung im zweiten Raum (102) regulierenden Betriebsparameters ($u_2$) der zweiten Wärmetauschvorrichtung (20) in Abhängigkeit der ermittelten ersten Temperaturdifferenz ($\Delta T_1$) und der ermittelten zweiten Temperaturdifferenz ($\Delta T_2$).

2. Verfahren nach Anspruch 1, **dadurch gekennzeichnet, dass**
 die erste und die zweite Wärmetauschvorrichtung (10, 20) als Flächenwärmetauscher ausgeführt sind, die jeweils einen innerhalb eines Bodens und/oder innerhalb von Wänden und/oder innerhalb einer Decke des jeweiligen Raums (101, 102) angeordneten Heizkreis (12, 22) zur Durchleitung des Energietransportmediums umfassen.

3. Verfahren nach Anspruch 2, **dadurch gekennzeichnet, dass**
es sich bei den die Wärmetauschleistung regulierenden Betriebsparametern ($u_1$, $u_2$) der ersten und der zweiten Wärmetauschvorrichtung (10, 20) um Durchflussmengen und/oder Volumenströme und/oder Strömungsgeschwindigkeiten des Energietransportmediums im jeweiligen Heizkreis (12, 22) regulierende Betriebsparameter ($u_1$, $u_2$) handelt, insbesondere handelt es sich jeweils um einen Öffnungsgrad eines dem Heizkreis (12, 22) der jeweiligen Wärmetauschvorrichtung (10, 20) zugeordneten Steuerungsventils (11, 21).

4. Verfahren nach einem der vorherigen Ansprüche, **dadurch gekennzeichnet, dass**
zumindest der die Wärmetauschleistung im zweiten Raum (102) regulierende Betriebsparameter ($u_2$) der zweiten Wärmetauschvorrichtung (20) stufenweise mit zumindest einer Zwischenstufe oder stufenlos zwischen einem vorbestimmten Mindestwert und einem vorbestimmten Maximalwert einstellbar ist

5. Verfahren nach einem der vorherigen Ansprüche, **dadurch gekennzeichnet, dass** das Verfahren weiterhin umfasst:

   - Bereitstellen eines Grenzwertes zum Einstellen des die Wärmetauschleistung im zweiten Raum (102) regulierenden Betriebsparameters ($u_2$) der zweiten Wärmetauschvorrichtung (20);

   wobei im Zuge des Steuerns der Raumtemperatur im ersten Raum (101) das Einstellen des die Wärmetauschleistung im zweiten Raum (102) regulierenden Betriebsparameters ($u_2$) der zweiten Wärmetauschvorrichtung (20) derart erfolgt, dass die Wärmetauschleistung im zweiten Raum (102) reduziert wird, falls die ermittelte zweite Temperaturdifferenz ($\Delta T_2$) den bereitgestellten Grenzwert unterschreitet.

6. Verfahren nach Anspruch 5, **dadurch gekennzeichnet, dass**
das Bereitstellen des Grenzwertes zum Einstellen des die Wärmetauschleistung im zweiten Raum (102) regulierenden Betriebsparameters ($u_2$) der zweiten Wärmetauschvorrichtung (20) umfasst:

   - Ermitteln des Grenzwertes zumindest in Abhängigkeit der ermittelten ersten Temperaturdifferenz ($\Delta T_1$); und
   - Ausgeben des ermittelten Grenzwertes als bereitgestellter Grenzwert

7. Verfahren nach Anspruch 6, **dadurch gekennzeichnet, dass**
der ermittelte Grenzwert ein gewichteter oder ein ungewichteter Mittelwert aus der ermittelten ersten und der ermittelten zweiten Temperaturdifferenz ($\Delta T_1$, $\Delta T_2$) ist.

8. Verfahren nach Anspruch 4 **dadurch gekennzeichnet, dass**

   das Verfahren weiterhin umfasst:

   - Festlegen eines zulässigen Wertebereichs für den die Wärmetauschleistung im zweiten Raum (102) regulierenden Betriebsparameter ($u_2$) der zweiten Wärmetauschvorrichtung (20), der innerhalb eines Wertebereichs zwischen dem vorbestimmten Maximalwert und dem vorbestimmten Mindestwert liegt;

   wobei im Zuge des Steuerns der Raumtemperatur im ersten Raum (101) das Einstellen des die Wärmetauschleistung im zweiten Raum (102) regulierenden Betriebsparameters ($u_2$) der zweiten Wärmetauschvorrichtung (20) innerhalb des festgelegten zulässigen Wertebereichs erfolgt.

9. Verfahren nach Anspruch 8, **dadurch gekennzeichnet, dass**
das Festlegen des zulässigen Wertebereichs für den die Wärmetauschleistung im zweiten Raum (102) regulierenden Betriebsparameter ($u_2$) umfasst:

   - Ermitteln eines Referenzwertes zum Einstellen des die Wärmetauschleistung im zweiten Raum (102) regulierenden Betriebsparameters ($u_2$) zumindest in Abhängigkeit der ermittelten ersten Temperaturdifferenz ($\Delta T_1$);
   - Ermitteln einer Obergrenze des zulässigen Wertebereichs auf Basis der ermittelten zweiten Temperaturdifferenz ($\Delta T_2$) und dem ermittelten Referenzwert, wobei die Obergrenze für den Fall, dass die ermittelte zweite Temperaturdifferenz ($\Delta T_2$) geringer ausfällt als der ermittelte Referenzwert, kleiner ist als der vorbestimmte Maximalwert;
   - Ausgeben des Wertebereichs zwischen dem vorbestimmten Mindestwert und der ermittelten Obergrenze als zulässigen Wertebereich für den die Wärmetauschleistung im zweiten Raum (102) regulierenden Betriebsparameter ($u_2$) der zweiten Wärmetauschvorrichtung (20).

10. Verfahren nach Anspruch 9, **dadurch gekennzeichnet, dass**
im Zuge des Festlegens des zulässigen Wertebereichs das Ermitteln der Obergrenze derart erfolgt, dass mit steigender Differenz aus dem ermittelten Referenzwert und der ermittelten zweiten Temperaturdifferenz ($\Delta T_2$) die Obergrenze relativ zum vorbestimmten Maximalwert reduziert wird.

11. Verfahren nach einem der vorherigen Ansprüche, **dadurch gekennzeichnet, dass**

das Heizungssystem zusätzlich N weitere über das hydraulische Leitungsnetzwerk (50) mit dem temperierten Energietransportmedium versorgte Wärmetauschvorrichtungen umfasst, die jeweils einem von N weiteren Räumen zugeordnet und zum Temperieren des jeweiligen weiteren Raums eingerichtet sind, wobei N≥1 gilt, und das Verfahren weiterhin umfasst:

- Bereitstellen von jeweiligen Soll-Temperaturen für jeden der N weiteren Räume;
- Erfassen von jeweiligen Ist-Temperaturen für jeden der N weiteren Räume;
- Ermitteln von jeweiligen Temperaturdifferenzen zwischen der bereitgestellten Soll-Temperatur und der erfassten Ist-Temperatur für jeden der N weiteren Räume;

wobei das Steuern der Raumtemperatur im ersten Raum (101) weiterhin für jeden der N weiteren Räume umfasst:

- Einstellen eines eine Wärmetauschleistung im jeweiligen weiteren Raum regulierenden Betriebsparameters der dem jeweiligen Raum zugeordneten Wärmetauschvorrichtung in Abhängigkeit der ermittelten ersten und zweiten Temperaturdifferenzen ($\Delta T_1$, $\Delta T_2$) sowie der ermittelten Temperaturdifferenzen in jedem der N weiteren Räume.

12. Verfahren nach einem der vorherigen Ansprüche, **dadurch gekennzeichnet, dass**
das Steuern der Raumtemperatur im ersten Raum (101) ferner einen oder mehrere der folgenden Schritte umfasst:

- Einstellen einer Temperatur des durch die Wärmequellenvorrichtung (30) temperierten Energietransportmediums zur Versorgung der Wärmetauschvorrichtungen (10, 20);
- Einstellen eines Volumenstroms des durch die Wärmequellenvorrichtung (30) temperierten Energietransportmediums zur Versorgung der Wärmetauschvorrichtungen (10, 20).

13. Verfahren nach einem der vorherigen Ansprüche, **dadurch gekennzeichnet, dass**
das Verfahren weiterhin umfasst:

- Steuern einer Raumtemperatur im zweiten Raum (102) durch:

- Einstellen des die Wärmetauschleistung im zweiten Raum (102) regulierenden Betriebsparameters ($u_2$) der zweiten Wärmetauschvorrichtung (20) in Abhängigkeit der ermittelten zweiten Temperaturdifferenz ($\Delta T_2$); und
- Einstellen des die Wärmetauschleistung im ersten Raum (101) regulierenden Betriebsparameters ($u_1$) der ersten Wärmetauschvorrichtung (10) in Abhängigkeit der ermittelten ersten Temperaturdifferenz ($\Delta T_1$) und der ermittelten zweiten Temperarturdifferenz ($\Delta T_2$).

14. Heizungssystem zum Steuern einer Raumtemperatur, das auf einem hydraulischen Leitungsnetzwerk (50) für ein Energietransportmedium basiert und zumindest umfasst:

- eine zum Temperieren des Energietransportmediums eingerichtete Wärmequellenvorrichtung (30);
- eine einem ersten Raum (101) zugeordnete, über das hydraulische Leitungsnetzwerk (50) mit dem temperierten Energietransportmedium versorgte erste Wärmetauschvorrichtung (10), die zum Temperieren des ersten Raums (101) eingerichtet ist; und
- eine einem vom ersten Raum (101) abgetrennten, zweiten Raum (102) zugeordnete, über das hydraulische Leitungsnetzwerk (50) mit dem temperierten Energietransportmedium versorgte zweite Wärmetauschvorrichtung (20), die zum Temperieren des zweiten Raums (102) eingerichtet ist;

- einen im ersten Raum (101) angeordneten ersten Temperatursensor (41);
- einen im zweiten Raum (102) angeordneten zweiten Temperatursensor (42); und
- eine Steuervorrichtung (40), die zumindest mit der ersten und der zweiten Wärmetauschvorrichtung (10, 20) sowie mit dem ersten und dem zweiten Temperatursensor (41, 42) gekoppelt ist;

wobei die Steuervorrichtung (40) im Zuge eines Steuerns einer Raumtemperatur im ersten Raum (101) mittels des Heizungssystems eingerichtet ist, einen eine Wärmetauschleistung im ersten Raum (101) regulierenden Betriebsparameter ($u_1$) der ersten Wärmetauschvorrichtung (10) in Abhängigkeit einer durch die Steuervorrichtung (40) ermittelten ersten Temperaturdifferenz ($\Delta T_1$) zwischen einer der Steuervorrichtung (40) bereitgestellten Soll-Temperatur ($T_{Soll,1}$) für den ersten Raum (101) und einer und einer durch den ersten Temperatursensor (41) erfassten Ist-Temperatur ($T_{Ist,1}$) einzustellen;
**dadurch gekennzeichnet, dass**
die Steuervorrichtung (40) ferner dazu eingerichtet ist, im Zuge des Steuerns der Raumtemperatur im ersten Raum (101) einen eine Wärmetauschleistung im zweiten Raum (102) regulierenden Betriebsparameter ($u_2$) der zweiten Wärmetauschvorrichtung (20) in Abhängigkeit der ermittelten ersten Temperaturdifferenz ($\Delta T_1$) sowie in Abhängigkeit einer durch die Steuervorrichtung (40) ermittelten zweiten Temperaturdifferenz ($\Delta T_2$) zwischen einer der Steuervorrichtung (40) bereitgestellten Soll-Temperatur ($T_{Soll,2}$) für den zweiten Raum (102) und einer durch den zweiten Temperatursensor (42) erfassten Ist-Temperatur ($T_{Ist,1}$) einzustellen.

**15.** Steuervorrichtung (40) zum Einsatz in einem Heizungssystem nach Anspruch 14.

S1

Bereitstellen von $T_{Soll,1}$ und $T_{Soll,2}$

S2

Erfassen von $T_{Ist,1}$ und $T_{Ist,2}$

S3

Ermitteln von $\Delta T_1$

S4

Ermitteln von $\Delta T_2$

S5

S5.1

Einstellen Betriebsparameter der ersten
Wärmetauschvorrichtung

Vergleich $\Delta T_1$, $\Delta T_2$

$\Delta T_1 \leq \Delta T_2$

$\Delta T_1 > \Delta T_2$

S5.2

Absenken Betriebsparameter der zweiten
Wärmetauschvorrichtung

S6

Pause vorbestimmter Länge

Fig. 1

Fig. 2

Fig. 3

Europäisches
Patentamt

European
Patent Office

Office européen
des brevets

# EUROPÄISCHER RECHERCHENBERICHT

**Nummer der Anmeldung**

**EP 23 15 4637**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/072758 A2 (KYUNGDONG NETWORK CO LTD [KR]; KIM SI-HWAN [KR]) 11. Juni 2009 (2009-06-11) * Absatz [0019] - Absatz [0026] * * Absatz [0055] - Absatz [0072] * * Tabelle 1 * * Abbildungen * ----- | 1-15 | INV. F24D19/10 F24H15/175 G05D23/19 F24H15/254 F24H15/31 |
| X | EP 3 470 745 A1 (SHEEN JIFUH [TW]) 17. April 2019 (2019-04-17) * Absatz [0004] - Absatz [0010] * * Absatz [0022] - Absatz [0025] * * Abbildungen * ----- | 1,2,14, 15 | |
| X | DE 42 03 613 A1 (SANDLER ENERGIETECHNIK [DE]) 12. August 1993 (1993-08-12) * Spalte 1, Zeile 46 - Spalte 2, Zeile 32 * * Spalte 3, Zeile 42 - Spalte 4, Zeile 10 * * Abbildungen * ----- | 1,14,15 | |

| RECHERCHIERTE SACHGEBIETE (IPC) |
|---|
| F24D G05D F24H |

Der vorliegende Recherchenbericht wurde für alle Patentansprüche erstellt

| Recherchenort | Abschlußdatum der Recherche | Prüfer |
|---|---|---|
| München | 19. Juni 2023 | Arndt, Markus |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 4637

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-06-2023

| Im Recherchenbericht angeführtes Patentdokument | Datum der Veröffentlichung | Mitglied(er) der Patentfamilie | Datum der Veröffentlichung |
|---|---|---|---|
| WO 2009072758 A2 | 11-06-2009 | CN 101889175 A<br>EP 2225497 A2<br>KR 20090058052 A<br>US 2010258194 A1<br>WO 2009072758 A2 | 17-11-2010<br>08-09-2010<br>09-06-2009<br>14-10-2010<br>11-06-2009 |
| EP 3470745 A1 | 17-04-2019 | KEINE | |
| DE 4203613 A1 | 12-08-1993 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- EP 2175206 A2